# EUROPEAN PATENT SPECIFICATION

(11) **EP 3 427 582 B1**
(45) Date of publication and mention of the grant of the patent: **09.12.2020**
(21) Application number: 18183292.4
(22) Date of filing: 13.07.2018
(51) Int. Cl.: A01N 25/10, A01N 31/02, A01N 35/02, A01N 37/02, A01P 19/00

(54) **SUSTAINED RELEASE PHEROMONE PREPARATION AND METHOD FOR CONTROLLING INSECT PEST USING THE SAME**
PHEROMONPRÄPARAT MIT VERZÖGERTER FREISETZUNG UND VERFAHREN ZUR INSEKTENSCHÄDLINGSBEKÄMPFUNG UNTER DESSEN VERWENDUNG
PRÉPARATION DE PHÉROMONE À LIBÉRATION PROLONGÉE ET PROCÉDÉ DE LUTTE CONTRE LES INSECTES L'UTILISANT

(30) Priority: 14.07.2017 JP 2017137953
(43) Date of publication of application: 16.01.2019
(73) Proprietor: Shin-Etsu Chemical Co., Ltd., Tokyo 100-0004 (JP)
(72) Inventor: SAGUCHI, Ryuichi, Joetsu-shi, Niigata 942-8601 (JP); KINSHO, Takeshi, Joetsu-shi, Niigata 942-8601 (JP); HOJO, Tatsuya, Joetsu-shi, Niigata 942-8601 (JP); OHNO, Erina, Joetsu-shi, Niigata 942-8601 (JP); ISHIBASHI, Naoki, Joetsu-shi, Niigata 942-8601 (JP)
(74) Representative: De Vries & Metman

(56) References cited:
- US-A- 5 993 843
- US-A1- 2003 145 518
- US-A1- 2010 196 430

## Description

### BACKGROUND OF THE INVENTION

### 1. Field of the Invention

The invention relates to a sustained release pheromone preparation and a method for controlling an insect pest using the same.

### 2. Related Art

Conventionally, a sustained release pheromone preparation has been used for the purpose of insect pest control by mating disruption. Examples of the sustained release pheromone preparation include a preparation having a pheromone substance enclosed in a polymer tube, a preparation having a pheromone substance enclosed in a polymer ampoule, and a preparation having a pheromone substance wrapped by a polymer sheet or film. Such a sustained release pheromone preparation is required to be capable of sustainedly releasing a pheromone substance in a stable manner during the period (two to six months) of emergence of insect pest.

Examples of a polymer material for use in the sustained release pheromone preparation include a thermoplastic resin such as polyolefin, polyvinyl chloride, polystyrene, polyvinyl acetate, polyurethane, acrylic and ABS resins, and copolymers thereof in consideration of the processability.

With increasing demand for reducing the environmental burden, there is a strong need for making such a sustained release pheromone preparation using a polymer which can undergo spontaneous disintegration and biodegradation. An aliphatic polyester is widely known as one of the biodegradable polymers. The fact that molecular chains of the aliphatic polyester are firmly held together by electrostatic interaction due to the presence of ester bonds makes it difficult for a pheromone substance to diffuse through the interstices of those polymer segments, and the permeability of the pheromone substance through the membrane is thereby suppressed.

For example, JP H10-008031A proposes the improvement of permeability of a pheromone substance through a membrane of an aliphatic polyester resin by use of a modifier for controlling sustained release of the pheromone substance. US 5993843 describes a biodegradable sustained-release preparation which comprises a mixture of 99-10 parts by weight of an aliphatic polyester and 1-90 wt.% of a modifier. It is indicated that no particular limitation is imposed on the aliphatic polyester in so far as it has biodegradability. Specific examples are stated to include condensation and polymerisation products between a C2-C20 carboxylic acid and a C2-C20 alcohol.

### SUMMARY OF THE INVENTION

Conventionally, for example, short tubular sustained release pheromone preparations, each having a length of 100 to 300 mm, are uniformly installed in a field, typically 50 to 5,000 in number per hectare. However, such installation requires a large amount of labor. One approach to address this problem is to use a sustained release pheromone preparation in a long tubular form like a rope (hereinafter also called "rope-like sustained release pheromone preparation"). Since some pheromone substances are expensive, it is desirable that the total amount of pheromone substance to be used for the rope-like sustained release pheromone preparations be kept same as that for the short tubular sustained release pheromone preparations. To that end, it is required that the inner diameter of the container of rope-like sustained release pheromone preparation should be decreased in order to reduce the amount of pheromone substance to be loaded per unit length. It is also required that the release rate of pheromone substance per unit length should be reduced so as to allow the pheromone substance to be released over a predetermined period of time. In this case, the release rate of pheromone substance is controlled by the membrane thickness. However, there is a problem that conventionally used high density polyethylene (HDPE) is unsuitable for practical use. It is because, due to its high pheromone substance permeability, the membrane thickness must be increased in order to suppress the release rate of pheromone substance so that an amount of the HDPE must be increased proportionally to an increased length of the sustained release pheromone preparation. Although an aliphatic polyester has lower pheromone substance permeability than HDPE, it is still impracticable to sufficiently suppress the amount of the polymer required for producing the rope-like sustained release pheromone preparation.

Thus, there is a need for a polymer material having good processability and very low pheromone substance permeability.

As a result of intensive studies to achieve the above objective, the inventors have found that the above-mentioned problem can effectively be solved by use of a polymer blend of an aliphatic polyester and a poly(hydroxyalkanoate) as a material for a pheromone permeable membrane. This finding has led to the invention.

In one aspect of the invention, there is provided a sustained release pheromone preparation comprising:
at least one pheromone substance, and
a container for enclosing the pheromone substance therein, the container comprising a polymer membrane which comprises a polymer blend of:
   an aliphatic polyester having the following structural units: 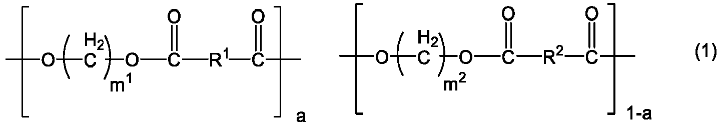 wherein "a" and "1-a" mean compositional ratios of the structural units and "a" is the number which satisfies the equation: 0<a≤1, R¹ is one selected from divalent hydrocarbon groups having 1 to 8 carbon atoms, R² is one selected from divalent hydrocarbon groups having 1 to 7 carbon atoms, with the proviso that R¹ has more carbon atoms than R² does when "a" is not 1, m¹ and m² may be the same as or different from each other and each stands for a positive integer of from 2 to 10, and
   a poly(hydroxyalkanoate) having the following structural units: 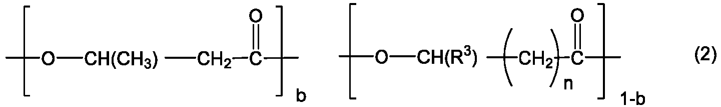 wherein "b" and "1-b"mean compositional ratios of the structural units and "b" is the number which satisfies the equation: 0<b<1, R³ is one selected from a hydrogen atom and monovalent hydrocarbon groups having 1 to 4 carbon atoms, "n" stands for an integer of from 0 to 4, with the proviso that "n" is not 1 when R³ is a methyl group, wherein the pheromone substance is selected from the group consisting of aliphatic alcohols having 10 to 18 carbon atoms, acetate esters of aliphatic alcohols having 10 to 18 carbon atoms, and aliphatic aldehydes having 10 to 18 carbon atoms.

In another aspect of the invention, there is provided a method for controlling an insect pest, comprising a step of installing the above-mentioned sustained release pheromone preparation in a field to allow the pheromone substance to permeate through the polymer membrane and to be released into the field.

According to the invention, a pheromone substance can be released for a prolonged period by use of a polymer blend of the aliphatic polyester and the poly(hydroxyalkanoate), without the need for increasing the membrane thickness. As a result, the amount of polymer can be reduced in an economical way. Further, the labor of installation work can be reduced by use of a rope-like sustained release pheromone preparation.

### BRIEF DESCRIPTION OF THE DRAWINGS

Figure 1 shows the percentage of remaining pheromone substance with respect to the time elapsed in days in Example 1 and Comparative Example 1.
Figure 2 shows the percentage of remaining pheromone substance with respect to the time elapsed in days in Example 2.
Figure 3 shows the percentage of remaining pheromone substance with respect to the time elapsed in days in Example 3.
Figure 4 shows the percentage of remaining pheromone substance with respect to the time elapsed in days in Example 4 and Comparative Example 2.
Figure 5 shows the percentage of remaining pheromone substance with respect to the time elapsed in days in Examples 5 and 6.
Figure 6 shows the percentage of remaining pheromone substance with respect to the time elapsed in days in Example 7.
Figure 7 shows the percentage of remaining pheromone substance with respect to the time elapsed in days in Example 8.
Figure 8 shows the percentage of remaining pheromone substance with respect to the time elapsed in days in Example 9.
Figure 9 shows the percentage of remaining pheromone substances with respect to the time elapsed in days in Example 10.
Figure 10 shows the percentage of remaining pheromone substances with respect to the time elapsed in days in Example 11.

### DETAILED DESCRIPTION OF THE PREFERRED EMBODIMENTS

First, there will be explained the sustained release pheromone preparation comprising at least one pheromone substance and a container for enclosing the pheromone substance therein, the container comprising a polymer membrane which comprises a polymer blend of an aliphatic polyester and a poly(hydroxyalkanoate).

The aliphatic polyester comprises the following structural units: 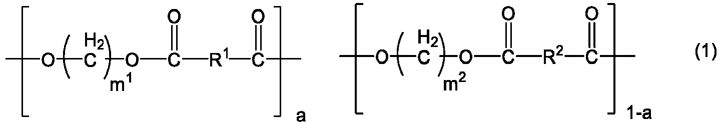 wherein "a" and "1-a" mean compositional ratios of the structural units and "a" is the number which satisfies the equation: 0<a≤1, R¹ is one selected from divalent hydrocarbon groups having 1 to 8 carbon atoms, R² is one selected from divalent hydrocarbon groups having 1 to 7 carbon atoms, with the proviso that R¹ has more carbon atoms than R² does when "a" is not 1, m¹ and m² may be the same as or different from each other and each stands for a positive integer of from 2 to 10.

The aliphatic polyester of general formula (1) is a condensation polymer of one or two dicarboxylic acids, each having 3 to 10 carbon atoms, and one or two alkanediols, each having 2 to 10 carbon atoms.

The dicarboxylic acid preferably contains 3 to 10 carbon atoms (1 to 8 carbon atoms for R¹ and 1 to 7 carbon atoms for R²), and more preferably 4 to 8 carbon atoms (2 to 6 carbon atoms for R¹ and 2 to 5 carbon atoms for R²).

Examples of the dicarboxylic acid include a linear saturated dicarboxylic acid such as malonic acid, succinic acid, glutaric acid, adipic acid, pimelic acid, suberic acid, azelaic acid and sebacic acid; a linear unsaturated dicarboxylic acid such as fumaric acid, maleic acid and acetylenedicarboxylic acid; and a benzene dicarboxylic acid, such as phthalic acid, isophthalic acid and terephthalic acid. Succinic acid, adipic acid and phthalic acid are preferred from the standpoint of the importance of polarity and molecular size of a pheromone substance as well as crystallinity and polymer chain interstices of the polymer membrane on the mechanism of pheromone substance permeability.

Examples of the divalent hydrocarbon group having 1 to 8 carbon atoms, as denoted by R¹, include a linear saturated hydrocarbon group such as methylene, ethylene, 1,3-propylene, 1,4-butylene, 1,5-pentylene, 1,6-hexylene, 1,7-heptylene and 1,8-octylene; a linear unsaturated hydrocarbon group such as (E)-ethene-1,2-diyl, (Z)-ethene-1,2-diyl and ethyne-1,2-diyl; and a cyclic unsaturated hydrocarbon group such as 1,2-phenylene, 1,3-phenylene and 1,4-phenylene.

Examples of the divalent hydrocarbon group having 1 to 7 carbon atoms, as denoted by R², include a linear saturated hydrocarbon group such as methylene, ethylene, 1,3-propylene, 1,4-butylene, 1,5-pentylene, 1,6-hexylene and 1,7-heptylene; a linear unsaturated hydrocarbon group such as (E)-ethene-1,2-diyl, (Z)-ethene-1,2-diyl, and ethyne-1,2-diyl; and a cyclic unsaturated hydrocarbon group such as 1,3-phenylene and 1,4-phenylene.

The alkanediol preferably has 2 to 10 carbon atoms (2 to 10 carbon atoms for each of m¹ and m²), and more preferably 2 to 6 carbon atoms (2 to 6 carbon atoms for each of m¹ and m²).

Examples of the alkanediol include a linear saturated diol such as 1,2-ethanediol, 1,3-propanediol, 1,4-butanediol, 1,5-pentanediol, 1,6-hexanediol, 1,7-heptanediol, 1,8-octanediol, 1,9-nonanediol and 1,10-decanediol. From the standpoint of polarity and molecular size of a pheromone substance as well as crystallinity and polymer chain interstices of the polymer membrane, 1,4-butanediol is preferred.

The "a" and "1-a" mean compositional ratios of the structural units and "a" is the number which satisfies the equation: 0<a≤1, preferably 0<a≤1, more preferably 0.05≤a≤0.25, and still more preferably 0.15≤a≤0.25, from the standpoint of pheromone substance permeability.

When a=1, the aliphatic polyester is a condensation polymer of one dicarboxylic acid and one alkanediol. Examples of the aliphatic polyester with a=1 include polyethylene succinate, polyethylene adipate, polyethylene phthalate, polypropylene succinate, polypropylene adipate, polypropylene phthalate, polybutylene succinate, polybutylene adipate and polybutylene phthalate. From the standpoint of the plasticity of molded article, polybutylene succinate, polybutylene adipate and polybutylene phthalate are preferred, and polybutylene succinate is particularly preferred.

When 0<a<1, the aliphatic polyester is a condensation polymer of two dicarboxylic acids and one or two alkanediols, and preferably a condensation polymer of two dicarboxylic acids and one alkanediol (m¹=m²). There is no particular limitation with regard to the sequence or arrangement of the structural units having the compositional ratio "a" and the structural units having the compositional ratio "1-a". For example, the polymer may be a random copolymer or a block copolymer. The polymer is preferably a random copolymer. Examples of the aliphatic polyester with 0<a<1 include polyethylene adipate succinate, polyethylene terephthalate succinate, polypropylene adipate succinate, polybutylene adipate succinate, polybutylene terephthalate succinate, and polypropylene terephthalate succinate. Polybutylene adipate succinate and polybutylene terephthalate succinate are preferred from the standpoint of the plasticity of molded article.

The poly(hydroxyalkanoate) is a condensation polymer of 3-hydroxybutyric acid and a hydroxyalkanoic acid having 2 to 10 carbon atoms, as denoted by general formula (2) below. There is no particular limitation with regard to the sequence or arrangement of this binary copolymer. For example, the copolymer may be a random copolymer or a block copolymer. The copolymer is preferably a random copolymer. In general formula (2), R³ is a hydrogen atom or a monovalent hydrocarbon group having 1 to 4 carbon atoms, "n" represents an integer of from 0 to 4, with the proviso that "n" is not 1 when R³ is a methyl group. The "b" and "1-b" mean compositional ratios of structural units and "b" is the number which satisfies the equation: 0<b<1.

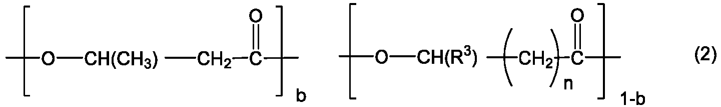

The hydroxyalkanoic acid preferably contains 2 to 10 carbon atoms, more preferably 2 to 7 carbon atoms, and still more preferably 4 to 6 carbon atoms. Examples of the hydroxyalkanoic acid include a monohydroxyalkanoic acid such as 2-hydroxyethanoic acid, 2-hydroxypropanoic acid, 3-hydroxypropanoic acid, 2-hydroxybutyric acid, 4-hydroxybutyric acid, 2-hydroxypentanoic acid, 3-hydroxypentanoic acid, 4-hydroxypentanoic acid, 5-hydroxypentanoic acid, 2-hydroxyhexanoic acid, 3-hydroxyhexanoic acid, 4-hydroxyhexanoic acid, 5-hydroxyhexanoic acid, 6-hydroxyhexanoic acid, 3-hydroxyheptanoic acid, 4-hydroxyheptanoic acid, 5-hydroxyheptanoic acid, 6-hydroxyheptanoic acid, 4-hydroxyoctanoic acid, 5-hydroxyoctanoic acid, 6-hydroxyoctanoic acid, 5-hydroxynonanoic acid, 6-hydroxynonanoic acid and 6-hydroxydecanoic acid. From the standpoint of processability of the polymer blend with the aliphatic polyester, 3-hydroxyhexanoic acid is preferred.

Examples of the monovalent hydrocarbon group containing 1 to 4 carbon atoms, as denoted by R³, include methyl, ethyl, n-propyl, and n-butyl.

Examples of the poly(hydroxyalkanoate) include a condensation polymer of 3-hydroxybutyric acid and 2-hydroxyethanoic acid; a condensation polymer of 3-hydroxybutyric acid and 2-hydroxypropanoic acid; a condensation polymer of 3-hydroxybutyric acid and 3-hydroxypropanoic acid; a condensation polymer of 3-hydroxybutyric acid and 2-hydroxybutyric acid; a condensation polymer of 3-hydroxybutyric acid and 4-hydroxybutyric acid; a condensation polymer of 3-hydroxybutyric acid and 2-hydroxypentanoic acid; a condensation polymer of 3-hydroxybutyric acid and 3-hydroxypentanoic acid; a condensation polymer of 3-hydroxybutyric acid and 4-hydroxypentanoic acid; a condensation polymer of 3-hydroxybutyric acid and 5-hydroxypentanoic acid; a condensation polymer of 3-hydroxybutyric acid and 2-hydroxyhexanoic acid; a condensation polymer of 3-hydroxybutyric acid and 3-hydroxyhexanoic acid; a condensation polymer of 3-hydroxybutyric acid and 4-hydroxyhexanoic acid; a condensation polymer of 3-hydroxybutyric acid and 5-hydroxyhexanoic acid; a condensation polymer of 3-hydroxybutyric acid and 6-hydroxyhexanoic acid; a condensation polymer of 3-hydroxybutyric acid and 3-hydroxyheptanoic acid; a condensation polymer of 3-hydroxybutyric acid and 4-hydroxyheptanoic acid; a condensation polymer of 3-hydroxybutyric acid and 5-hydroxyheptanoic acid; a condensation polymer of 3-hydroxybutyric acid and 6-hydroxyheptanoic acid; a condensation polymer of 3-hydroxybutyric acid and 4-hydroxyoctanoic acid; a condensation polymer of 3-hydroxybutyric acid and 5-hydroxyoctanoic acid; a condensation polymer of 3-hydroxybutyric acid and 6-hydroxyoctanoic acid; a condensation polymer of 3-hydroxybutyric acid and 5-hydroxynonanoic acid; a condensation polymer of 3-hydroxybutyric acid and 6-hydroxynonanoic acid; and a condensation polymer of 3-hydroxybutyric acid and 6-hydroxydecanoic acid. From the standpoint of processability attributable to melting point and crystallization kinetics of the condensation polymer, the poly(hydroxyalkanoate) is preferably selected from the group consisting of a condensation polymer of 3-hydroxybutyric acid and 4-hydroxybutyric acid, a condensation polymer of 3-hydroxybutyric acid and 3-hydroxypentanoic acid, and a condensation polymer of 3-hydroxybutyric acid and 3-hydroxyhexanoic acid. The poly(hydroxyalkanoate) is particularly preferably a condensation polymer of 3-hydroxybutyric acid and 3-hydroxyhexanoic acid.

The "b" and "1-b" mean compositional ratios of the structural units and "b" is the number in the range of 0<b<1. From the standpoint of melting point and crystallization kinetics or processability with the aliphatic polyester, the "b" is preferably the number in the range of 0<b<1, more preferably a number in the range of 0.75≤b≤0.98, and still more preferably a number in the range of 0.85≤b≤0.95.

The blending weight ratio of the aliphatic polyester to the poly(hydroxyalkanoate) in the polymer blend preferably ranges from 50:50 to 98:2, more preferably from 60:40 to 95:5. When the aliphatic polyester is less than said 50 with respect to the blending weight ratio, the resulting blend polymer may show slow crystallization and poor dimensional stability during processing. When the poly(hydroxyalkanoate) is less than said 2 with respect to the blending weight ratio, it may become difficult to control the release of a sex pheromone substance.

The container comprising a polymer membrane which comprises a polymer blend may be in the form of a tube or an ampoule.

The tube may be in the form of a short tube having a length of 10 mm or more and less than 1,000 mm, or in the form of a long tube (such as a rope) having a length of from 1 m to 2,000 m.

The short tube is preferably configured to have an inner diameter of from 0.20 to 3.00 mm, a thickness of from 0.20 to 2.50 mm, and a length of from 10 mm to less than 1,000 mm; more preferably an inner diameter of from 0.20 to 3.00 mm, a thickness of from 0.20 to 2.50 mm, and a length of from 10 to 500 mm; and still more preferably an inner diameter of from 0.30 to 1.90 mm, a thickness of from 0.30 to 0.90 mm, and a length of from 10 to 400 mm, from the standpoint of ease of loading a pheromone substance, and/or a pheromone release rate, formability and/or productivity.

The long tube such as a rope is preferably configured to have an inner diameter of from 0.10 to 2.00 mm, a thickness of from 0.20 to 0.80 mm, and a length of from 1 m to 2,000 m; more preferably an inner diameter of from 0.10 to 2.00 mm, a thickness of from 0.20 to 0.80 mm, and a length of from 10 to 1,500 m; and still more preferably an inner diameter of from 0.12 to 1.00 mm, a thickness of from 0.25 to 0.60 mm, and a length of from 100 to 1,200 m, from the standpoint of ease of loading a pheromone substance, and/or a pheromone release rate, formability and/or productivity.

An ampoule may be preferably configured as a hollow container having a various shape, such as a spherical shape, an oval spherical shape, a hemispherical shape, a bottle shape, a cylindrical shape, a rectangular parallelepiped, or a gourd-like shape. The hollow container preferably has a wall thickness of from 0.20 to 2.50 mm and an inner capacity of 0.05 to 3.00 g from the standpoint of formability and dimensional stability. The hollow container may have a shape suitable for its suspension or hanging, or comprise a member or part suitable for its suspension or hanging, wherein the shape or the member or part has a shape such as a heart shape, a circular or semicircular shape, an S-shape, or a question mark shape, and serves as a jig for attachment.

Examples of the pheromone substance include an aliphatic alcohol having 10 to 18 carbon atoms, and more preferably 10 to 14 carbon atoms; an acetate ester of an aliphatic alcohol having 10 to 18 carbon atoms, and more preferably 10 to 14 carbon atoms; and an aliphatic aldehyde having 10 to 18 carbon atoms, and more preferably 10 to 16 carbon atoms.

Examples of the aliphatic alcohol having 10 to 18 carbon atoms include a saturated alcohol such as decanol, 1-dodecanol, 1-tetradecanol and 1-hexadecanol; an alcohol having one carbon-carbon double bond such as Z5-decenol, E5-decenol, undecenol, Z5-dodecenol, Z7-dodecenol, E7-dodecenol, Z8-dodecenol, E8-dodecenol, Z9-dodecenol, E9-dodecenol, E10-dodecenol, 11-dodecenol, Z5-tetradecenol, E5-tetradecenol, Z7-tetradecenol, Z8-tetradecenol, Z11-tetradecenol, E11-tetradecenol, Z11-hexadecenol, Z9-hexadecenol, Z3-octadecenol, E3-octadecenol and Z13-octadecenol; and an alcohol having two carbon-carbon double bonds such as Z5E7-dodecadienol, E5Z7-dodecadienol, E5E7-dodecadienol, Z7Z9-dodecadienol, Z7E9-dodecadienol, E7Z9-dodecadienol, E8E10-dodecadienol, 8,9-difluoro-E8E10-dodecadienol, 10,11-difluoro-E8E10-dodecadienol, Z9,11-dodecadienol, E9,11-dodecadienol, Z9Z11-tetradecadienol, Z9E11-tetradecadienol, Z9Z12-tetradecadienol, Z9E12-tetradecadienol, Z10Z12-tetradecadienol, E10E12-tetradecadienol, E7Z11-hexadecadienol, Z7Z11-hexadecadienol, Z3Z13-octadecadienol, E3Z13-octadecadienol, E2Z13-octadecadienol and 11-chloro-E8E10-undecadienol .

The acetate ester of an aliphatic alcohol having 10 to 18 carbon atoms has a structure obtainable by acetylation of the aliphatic alcohol having 10 to 18 carbon atoms. Examples of the acetate ester of an aliphatic alcohol having 10 to 18 carbon atoms include a saturated acetate compound such as decyl acetate, dodecyl acetate, tetradecyl acetate and hexadecyl acetate; an acetate compound having one carbon-carbon double bond such as Z3-decenyl acetate, Z4-decenyl acetate, E5-decenyl acetate, Z7-undecenyl acetate, Z8-undecenyl acetate, E9-undecenyl acetate, E7-dodecenyl acetate, Z7-dodecenyl acetate, Z8-dodecenyl acetate, E8-dodecenyl acetate, Z9-dodecenyl acetate, E9-dodecenyl acetate, 11-dodecenyl acetate, E4-tridecenyl acetate, Z4-tridecenyl acetate, E6-tridecenyl acetate, E8-tridecenyl acetate, Z8-tridecenyl acetate, Z11-tetradecenyl acetate, E11-tetradecenyl acetate, Z9-tetradecenyl acetate, Z11-hexadecenyl acetate, Z9-hexadecenyl acetate, Z3-octadecenyl acetate, Z13-octadecenyl acetate and E13-octadecenyl acetate; an acetate compound having two carbon-carbon double bonds such as Z3E5-dodecadienyl acetate, E3Z5-dodecadienyl acetate, E4Z10-dodecadienyl acetate, Z5E7-dodecadienyl acetate, E5Z7-dodecadienyl acetate, E7Z9-dodecadienyl acetate, E8E10-dodecadienyl acetate, Z9,11-dodecadienyl acetate, E4Z7-tridecadienyl acetate, Z9E12-tetradecadienyl acetate, Z9E11-tetradecadienyl acetate, Z7E11-hexadecadienyl acetate, Z7Z11-hexadecadienyl acetate, E3Z13-octadecadienyl acetate, Z3Z13-octadecadienyl acetate and E2Z13-octadecadienyl acetate; and an acetate compound having three carbon-carbon double bonds such as E3Z8Z11-tridecatrienyl acetate.

Eamples of the aliphatic aldehyde include a saturated aldehyde compound such as n-decanal, n-dodecanal, n-tetradecanal, n-hexadecanal and n-octadecanal; an aldehyde compound having one carbon-carbon double bond such as Z-5-decenal, 10-undecenal, Z-5-dodecenal, Z-7-dodecenal, Z-9-dodecenal, E9-dodecenal, Z5-tetradecenal, Z7-tetradecenal, Z9-tetradecenal, E11-tetradecenal, Z11-tetradecenal, Z10-pentadecenal, Z7-hexadecenal, Z9-hexadecenal, E10-hexadecenal, Z10-hexadecenal, E11-hexadecenal, Z11-hexadecenal, Z12-hexadecenal, Z13-hexadecen-11-enal, E2-octadecenal, Z9-octadecenal, E11-octadecenal, Z11-octadecenal, E13-octadecenal, Z13-octadecenal and E14-octadecenal; an aldehyde compound having two carbon-carbon double bonds such as E5Z10-dodecadienal, Z5E7-dodecadienal, Z5Z7-dodecadienal, E7Z9-dodecadienal, E8E10-dodecadienal, E8Z10-dodecadienal, Z8E10-dodecadienal, E9, 11-dodecadienal, Z9,11-dodecadienal, E8Z10-tetradecadienal, E8E10-tetradecadienal, Z9E11-tetradecadienal, Z9Z11-tetradecadienal, Z9E12-tetradecadienal, 10,12-tetradecadienal, E11,13-tetradecadienal, Z11,13-tetradecadienal, E9Z11-pentadecadienal, E6Z11-hexadecadienal, Z7E11-hexadecadienal, Z7Z11-hexadecadienal, E9Z11-hexadecadienal, Z9E11-hexadecadienal, Z9E12-hexadecadienal, E10E12-hexadecadienal, E10Z12-hexadecadienal, Z10E12-hexadecadienal, Z10Z12-hexadecadienal, E11E13-hexadecadienal, E11Z13-hexadecadienal, Z11E13-hexadecadienal, Z11Z13-hexadecadienal, E2Z13-octadecadienal, Z3Z13-octadecadienal, Z9Z12-octadecadienal, Z11Z13-octadecadienal, E11E14-octadecadienal and Z13Z15-octadecadienal; and an aldehyde compound having three carbon-carbon double bonds such as Z9E11,13-tetradecatrienal, E4E6Z11-hexadecatrienal, E10E12E14-hexadecatrienal, E10E12Z14-hexadecatrienal and Z9Z12Z15-octadecatrienal.

The pheromone substance is one or more selected from the group consisting of an aliphatic alcohol having 10 to 18 carbon atoms, an acetate ester of a aliphatic alcohol having 10 to 18 carbon atoms, and an aliphatic aldehyde having 10 to 18 carbon atoms. When two or more pheromone substances are used, they may be a combination of compounds having the same functional groups, such as a combination of two different aliphatic alcohols, or a combination of compounds having different functional groups, such as a combination of one aliphatic alcohol and one acetate ester.

For example, a sex pheromone for the American bollworm (Helicoverpa armigera) is a mixture of Z 11-hexadecenal and Z-9-hexadecenal, and a preferable weight ratio of Z 11-hexadecenal to Z-9-hexadecenal is in the range of from 98/2 to 90/10. A sex pheromone for the diamondback moth (Plutella xylostella) is a mixture of Z11-hexadecenal and Z11-hexadecenyl acetate, and a preferably weight ratio of Z11-hexadecenal to Z11-hexadecenyl acetate is in the range of 40/60 to 60/40.

The sustained release pheromone preparation may further comprise, along with the pheromone substance, an oil gelling agent. Examples of the oil gelling agent include an amino acid derivative, a long-chain fatty acid and a metal salt thereof, a saccharide derivative, and a wax. The oil gelling agent is preferably an amino acid derivative or a long-chain fatty acid from the standpoint of the strength of hydrogen bonds.

Examples of the amino acid derivative include an N-acylated amino acid, and a carboxy-esterified or carboxy-amidated amino acid, wherein amino acid having 2 to 15 carbon atoms is acylated, esterified or amidated. Examples of the amino acid derivative include di(cholesteryl/behenyl/octyldodecyl) N-lauroyl-L-glutamate, di(cholesteryl/octyldodecyl) N-lauroyl-L-glutamate, di(phytosteryl/behenyl/octyldodecyl)N-lauroyl-L-glutamate, di(phytosteryl/octyldodecyl) N-lauroyl-L-glutamate, N-lauroyl-L-glutamic acid dibutylamide, and N-ethylhexanoyl-L-glutamic acid dibutylamide.

Examples of the long-chain fatty acid include a saturated fatty acid having 8 to 24 carbon atoms such as octanoic acid, 2-ethylhexanoic acid, decanoic acid, lauric acid, myristic acid, stearic acid, palmitic acid, arachidic acid and behenic acid; and an unsaturated fatty acid having 8 to 24 carbon atoms such as palmitoleic acid, oleic acid, vaccenic acid, linoleic acid, linolenic acid, arachidonic acid, eicosadienoic acid, and erucic acid.

Examples of the metal salt of long-chain fatty acid include an aluminum salt, a magnesium salt, a manganese salt, an iron salt, a cobalt salt, a calcium salt, and a lead salt of the long-chain fatty acid mentioned above.

Examples of the saccharide derivative include a dextrin fatty acid ester such as dextrin laurate, dextrin myristate, dextrin palmitate, dextrin margarate, dextrin stearate, dextrin arachate, dextrin lignocerate, dextrin cerotate, dextrin 2-ethylhexanoate palmitate, and dextrin palmitate stearate; a sucrose fatty acid ester such as sucrose palmitate, sucrose stearate, and sucrose acetate/stearate; a fructooligosaccharide fatty acid ester such as fructooligosaccharide stearate, and fructooligosaccharide 2-ethylhexanoate; and a benzylidene derivative of sorbitol such as monobenzylidene sorbitol, and dibenzylidene sorbotol.

Examples of the wax include haze wax (main component: triglyceride of palmitic acid), urushi wax (main component: glyceride palmitate), carnauba wax (myricyl cerotate and myricyl alcohol), sugarcane wax (myricyl palmitate), palm wax (myricyl palmitate), beeswax (cerotic acid and myricyl palmitate), whale wax (cetyl palmitate), wool wax (ceryl alcohol and/or myristic acid), and paraffin wax (linear hydrocarbon).

The weight ratio of the pheromone substance to the oil gelling agent preferably ranges from 98:2 to 60:40, more preferably from 95:5 to 70:30, from the standpoint of costs or release performance.

An optional additive such as a diluent, a polymerization inhibitor, an anti-oxidant and an ultraviolet (UV) absorber, may be added to the pheromone substance.

Examples of the diluent include a vegetable oil such as coconut oil, corn oil, cottonseed oil, olive oil, palm oil, peanut oil, rapeseed oil and safflower oil; and a substance (such as silicone oil) having good solubility with the pheromone substance.

Examples of the polymerization inhibitor include 2,6-di-tert-butyl-4-methylphenol, and 2,2'-methylenebis(4-methyl-6-t-butylphenol).

Examples of the anti-oxidant include butylhydroxytoluene, butylhydroxyanisole, hydroquinone, and vitamine E.

Examples of the UV absorber include 2-hydroxy-4-octyloxybenzophenone, 2-(2'-hydroxy-3'-tert-butyl-5'-methylphenyl)-5-chlorobenzotriazole, and 2,5-di-t-butyl hydroquinone.

Each of the additive may be used in any appropriate amount known in the art, without any particular limitation. From the standpoint of the releasability of pheromone substance, the total content of the additive or additives preferably ranges from 0.05 to 20% by weight, more preferably from 1.00 to 10.0% by weight, based on the total weight of the pheromone substance, an optional oil gelling agent and the additive or additives.

Examples of the method for producing a sustained release pheromone preparation include, when a sustained release pheromone preparation is in the form of a tube, a method comprising a step of forming a polymer tube while simultaneously feeding a pheromone substance into the polymer tube; and a method comprising steps of: forming a polymer tube, and then feeding a pheromone substance into the polymer tube.

In an embodiment of the method comprising a step of forming a polymer tube while simultaneously feeding a pheromone substance into the polymer tube, a polymer tube of unlimited length, filled with the pheromone substance, is continuously formed, for example, by extrusion molding. More specifically, the method comprises steps of continuously extruding a melted polymer into a tubular form through an extrusion die to form a polymer tube, while continuously feeding the pheromone substance into the polymer tube through an orifice provided on a mandrel at the extrusion die, and winding the resulting rope-like sustained release pheromone preparation around a reel. The rope-like sustained release pheromone preparation may be melt-sealed at appropriate intervals, for example, by ultrasonic welding, followed by cutting at the melt-sealed parts to form a number of short tubular sustained release pheromone preparations, each preparation being sealed at both ends thereof.

In an embodiment of the method comprising steps of: forming a polymer tube; then feeding a pheromone substance into the polymer tube, wherein one end of the polymer tube is dipped in the pheromone substance placed in a vessel, while the inside of the polymer tube is vacuum-drawn from the other end of the polymer tube, so as to allow the pheromone substance to be fed into the polymer tube, or alternatively, feeding a pheromone substance into the polymer tube by pressurized injection from one end of the polymer tube; and winding the resulting rope-like sustained release pheromone preparation around a reel. The rope-like sustained release pheromone preparation may be melt-sealed at appropriate intervals, for example, by ultrasonic welding, followed by cutting at the melt-sealed parts to form a number of short tubular sustained release pheromone preparations, each preparation being sealed at both ends thereof.

The sustained release pheromone preparation in the form of a tube is preferably produced by the method comprising a step of forming a polymer tube while simultaneously feeding a pheromone substance, from the standpoint of feeding the pheromone substance easily and uniformly into the polymer tube even if the inner diameter of the tube is small.

The sustained release pheromone preparation in the form of an ampoule may be produced by the method comprising steps of: providing a mold with a shape of hollow container, then blow-molding to form a container while simultaneously feeding the pheromone substance into the container, and sealing the container.

Next, there will be explained the method for controlling an insect pest, comprising steps of: installing the sustained release pheromone preparation in a field to allow the pheromone substance having permeated through the polymer membrane to be released into the field.

The installation number of the sustained release pheromone preparations in a field may be variable depending on various parameters, such as a release rate of the sustained release pheromone preparation. When short tubular sustained release pheromone preparations are used, they are uniformly distributed in the field, preferably at 2 to 2,000 positions per hectare (ha), more preferably at 10 to 1,000 positions /ha, from the standpoint of uniform diffusion of the pheromone substance over the field.

In one of the embodiments for using a rope-like sustained release pheromone preparation, a rope-like sustained release pheromone preparation is unrolled from the reel and stretched linearly from one end of the field to the other end thereof along a ridge of farm products, while hanging it on branches. The rope-like sustained release pheromone preparation is cut when it reaches at the other end of the field. Then, the rope-like sustained release pheromone preparation is similarly installed along another ridge of farm products, separated away from the first ridge of farm products preferably by a distance of 4 to 60 meters, more preferably of 5 to 40 meters. Similar procedures are repeated so that the sustained release pheromone preparations are installed in the whole field. The total length of the installed rope-like sustained release pheromone preparations preferably ranges from 100 to 2,000 meters per hectare from the standpoint of workability and ease of installation.

When a sustained release pheromone preparation in the form of an ampoule is used, it is uniformly distributed in the field, preferably at 2 to 2,000 positions/ha, more preferably at 10 to 1,000 positions/ha, from the standpoint of uniform diffusion of the pheromone substance over the field.

In addition, installation of the sustained release pheromone preparation is preferably conducted in consideration of the period of emergence of the target insect pest.

A release rate of the pheromone substance into the field may vary depending on conditions such as the field environment and whether conditions. The release rate is not particularly limited as long as the pheromone substance is uniformly diffused over the field. It is preferably in the rage of from 0.01 to 20 g/day/ha.

Examples of an insect pest include insect pests which attack fruit trees, grapes, vegetables or the like and cause economic damage.

Examples of an insect pest which attacks a fruit tree include those feeding on foliage and trunks, such as oriental fruit moth (Grapholita molesta), codling moth (Cvdia pomonella), peach twig borer (Anarsia lineatella), peach fruit moth (Carposina niponensis), dark fruit-tree tortrix (Pandemis heparana), smaller tea tortrix (Adoxophves sp.), exotic leafroller moth (Archips fuscocupreanus), peachtree borer (Synanthedon exitiosa), and lesser peachtree borer (Synanthedon pictipes).

Examples of an insect pest which attacks grapes include those feeding on fruits and/or foliage, such as European grapevine moth (Lobesia botrana), European grape berry moth (Eupoecilia ambiguella), and light brown apple moth (Epiphyas postvittana).

Examples of an insect pest which attacks vegetables include oriental leafworm moth (Spodoptera litura), diamondback moth (Plutella xylostella), beet armyworm (Spodoptera exigua), oriental tobacco budworm (Helicoverpa assulta), American bollworm (Helicoverpa armigera), cabbage looper (Trichoplusia ni), tomato pinworm (Keiferia lycopersicella), and tomato leafminer (Tuta absoluta).

Other Examples include a pest of cotton, such as pink bollworm (Pectinophora gossypiella); a pest of sugarcane, such as Asiatic pink stem borer (Sesamia inferens), sugarcane shoot borer (Tetramoera schistaceana), and sugarcane click beetle (Melanotus okinawensis); and a forest pest, such as gypsy moth (Lymantria dispar).

The pheromone substance may be appropriately selected depending on the particular insect pest to be controlled.

For example, when the target insect pest is European grapevine moth, E7Z9-dodecadienyl acetate is selected as the pheromone substance; when the target insect pest is codling moth, E8Z10-dodecadienol is selected as the pheromone substance; and when the target insect pest is oriental fruit moth, Z8-dodecenyl acetate is selected as the pheromone substance.

As described above, there are provided the sustained release pheromone preparation comprising a polymer membrane comprising a polymer blend of an aliphatic polyester which is a condensation polymer of a dicarboxylic acid having 3 to 10 carbon atoms and an alkanediols having 2 to 10 carbon atoms, and a poly(hydroxyalkanoate) which is a condensation polymer of 3-hydroxybutyric acid and a hydroxyalkanoic acid having 2 to 10 carbon atoms; and a method for controlling an insect pest by using the sustained release pheromone preparation.

### EXAMPLES

The invention is further illustrated by the following Examples and Comparative Examples. However, it should not to be construed that the invention is limited by or to Examples.

### <Example 1>

A rope-like sustained release pheromone preparation was produced by extruding a 90:10 (w/w) polymer blend of polybutylene adipate succinate (Bionolle™ #3001, available from Showa Denko K.K.) having a compositional ratio of butylene adipate units to butylene succinate units of 0.20:0.80 and a condensation polymer (Aonilex™ X131A, available from Kaneka Corp.) of a 3-hydroxybutyric acid and 3-hydroxyhexanoic acid at a compositional ratio of 0.93:0.07 into a tube having an inner diameter of 1.40 mm and a thickness of 0.35 mm, while simultaneously feeding E7Z9-dodecadienyl acetate, which is a sex pheromone of the European grapevine moth, into the tube. This rope-like sustained release pheromone preparation was melt-sealed at 200-mm intervals by ultrasonic welding, and then cut at the sealed parts to form a number of short tubular sustained release pheromone preparations.

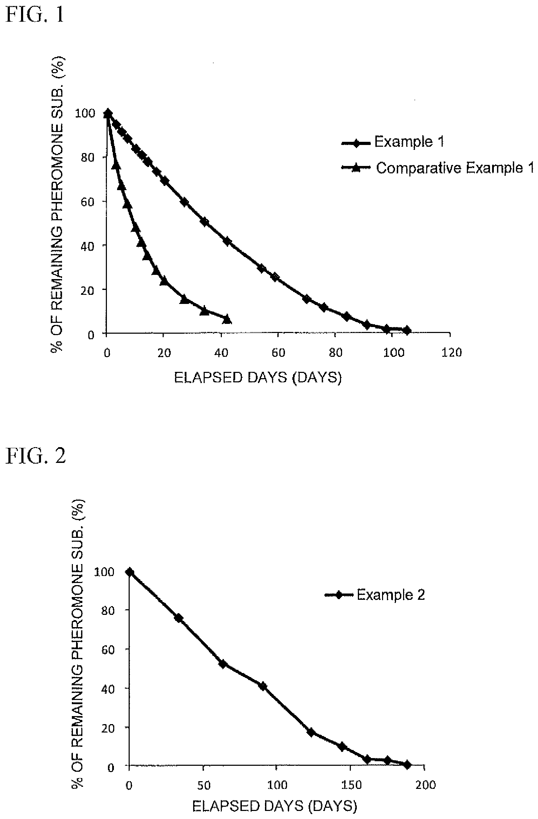

The short tubular sustained release pheromone preparation thus obtained was allowed to stand under the conditions of 30°C and a wind speed of 0.7 m/sec, and the percentages of remaining pheromone substance were determined with respect to the time elapsed in days by measuring the weight loss on a daily basis. The results are shown in FIG. 1. As shown in FIG. 1, the short tubular sustained release pheromone preparation was found to be capable of releasing E7Z9-dodecadienyl acetate over 80 days.

### <Example 2>

A hundred of short tubular sustained release pheromone preparations, each having an inner diameter of 1.40 mm, a thickness of 0.35 mm and a length of 200 mm, were prepared in the same manner as in Example 1, and were placed in a vineyard of the Sicily island, Italy, on April 3, 2016. Ten preparations were removed each time from the vineyard on May 6 (33 days after), June 5 (63 days after), July 2 (90 days after), August 4 (123 days after), August 25 (144 days after), September 11 (161 days after), September 25 (175 days after) and October 8 (188 days after).

The percentage of pheromone substance remaining in the short tubular sustained release pheromone preparation was determined by subjecting the collected short tubular sustained release pheromone preparations to solvent extraction of E7Z9-dodecadienyl acetate with n-hexane, followed by quantification by a gas chromatographic analysis with internal standard. The results are shown in FIG. 2. As shown in FIG. 2, the short tubular sustained release pheromone preparation was found to be capable of releasing E7Z9-dodecadienyl acetate over 150 days corresponding to the emergence period of the European grapevine moth.

### <Example 3>

A rope-like sustained release pheromone preparation was produced by extruding a 70:30 (w/w) polymer blend of polybutylene succinate (Bionolle™ #1001, available from Showa Denko K.K.) and a condensation polymer (Aonilex™ X131A, available from Kaneka Corp.) of 3-hydroxybutyric acid and 3-hydroxyhexanoic acid at a compositional ratio of 0.93:0.07 into a tube having an inner diameter of 0.62 mm and a thickness of 0.40 mm, while simultaneously feeding into the tube a mixed solution of E7Z9-dodecadienyl acetate, which is a sex pheromone substance of the European grapevine moth, and stearic acid, which is an oil gelling agent, at a weight ratio of 85:15. This rope-like sustained release pheromone preparation was melt-sealed at 200-mm intervals by ultrasonic welding, and then cut at the sealed parts to form a number of short tubular sustained release pheromone preparations.

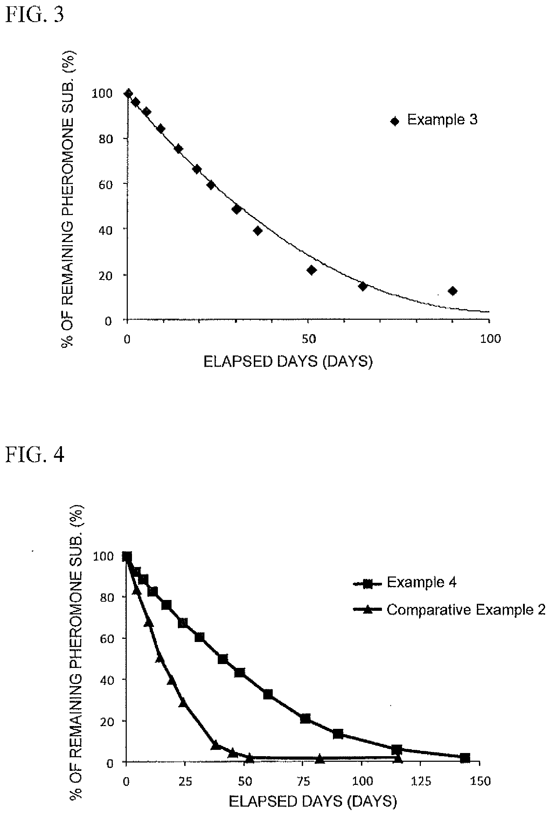

The percentage of pheromone substance remaining in the short tubular sustained release pheromone preparation was determined in the same manner as in Example 1. The results are shown in FIG. 3. As shown in FIG. 3, the short tubular sustained release pheromone preparation was found to be capable of releasing E7Z9-dodecadienyl acetate over 70 days.

### <Example 4>

A rope-like sustained release pheromone preparation was produced by extruding a 70:30 (w/w) polymer blend of polybutylene adipate succinate (Bionolle™ #3001, available from Showa Denko K.K.) having a compositional ratio of butylene adipate units to butylene succinate units of 0.20:0.80 and a condensation polymer (Aonilex™ X131A, available from Kaneka Corp.) of 3-hydroxybutyric acid and 3-hydroxyhexanoic acid at a compositional ratio of 0.93:0.07 into a tube having an inner diameter of 0.63 mm and a thickness of 0.40 mm, while simultaneously feeding into the tube a mixed solution of E8E10-dodecadienol, which is a sex pheromone substance of the codling moth, and stearic acid, which is an oil gelling agent, at a weight ratio of 70:30. This rope-like sustained release pheromone preparation was melt-sealed at 200-mm intervals by ultrasonic welding, and then cut at the sealed parts to form a number of short tubular sustained release pheromone preparations.

The percentage of pheromone substance remaining in the short tubular sustained release pheromone preparation was determined in the same manner as in Example 1. The results are shown in FIG. 4. As shown in FIG. 4, the short tubular sustained release pheromone preparation was found to be capable of releasing E8E10-dodecadienol over 90 days.

### <Example 5>

A rope-like sustained release pheromone preparation was produced by extruding a 60:40 (w/w) polymer blend of polybutylene adipate succinate (Bionolle™ #3001, available from Showa Denko K.K.) having a compositional ratio of butylene adipate units to butylene succinate units of 0.20:0.80 and a condensation polymer (Aonilex™ X131A, available from Kaneka Corp.) of 3-hydroxybutyric acid and 3-hydroxyhexanoic acid at a compositional ratio of 0.93:0.07 into a tube having an inner diameter of 0.44 mm and a thickness of 0.40 mm, while simultaneously feeding into the tube a mixed solution of Z8-dodecenyl acetate, which is a sex pheromone substance of the oriental fruit moth, and stearic acid, which is an oil gelling agent, at a weight ratio of 85:15. This rope-like sustained release pheromone preparation was melt-sealed at 200-mm intervals by ultrasonic welding, and then cut at the sealed parts to form a number of short tubular sustained release pheromone preparations.

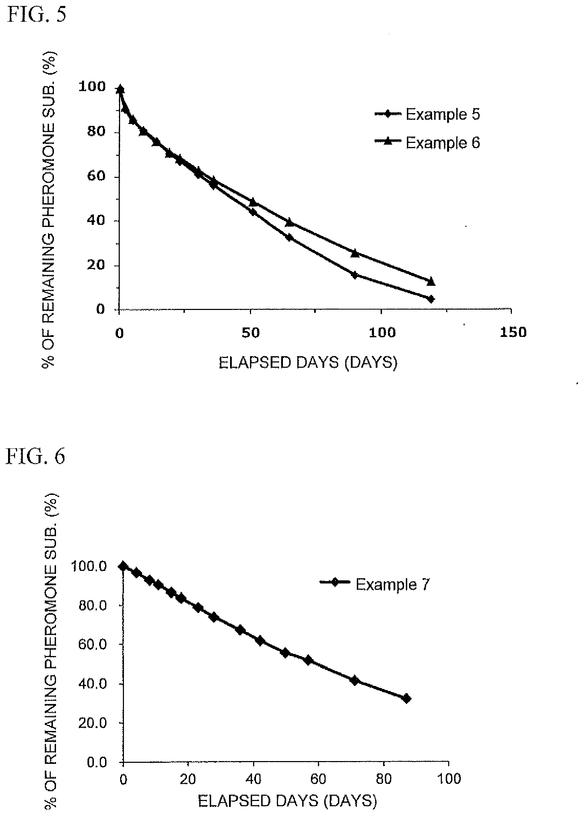

The percentage of pheromone substance remaining in the short tubular sustained release pheromone preparation was determined in the same manner as in Example 1. The results are shown in FIG. 5. As shown in FIG. 5, the short tubular sustained release pheromone preparation was found to be capable of releasing Z8-dodecenyl acetate over 100 days.

### <Example 6>

A rope-like sustained release pheromone preparation was produced by extruding a 60:40 (w/w) polymer blend of polybutylene adipate succinate (Bionolle™ #3001, available from Showa Denko K.K.) having a compositional ratio of butylene adipate units to butylene succinate units of 0.20:0.80 and a condensation polymer (Aonilex™ X131A, available from Kaneka Corp.) of 3-hydroxybutyric acid and 3-hydroxyhexanoic acid at a compositional ratio of 0.93:0.07 into a tube having an inner diameter of 0.63 mm and a thickness of 0.45 mm, while simultaneously feeding into the tube a mixed solution of Z8-dodecenyl acetate, which is a sex pheromone substance of the oriental fruit moth, and stearic acid, which is an oil gelling agent, at a weight ratio of 85:15. This rope-like sustained release pheromone preparation was melt-sealed at 200-mm intervals by ultrasonic welding, and then cut at the sealed parts to form a number of short tubular sustained release pheromone preparations.

The percentage of pheromone substance remaining in the short tubular sustained release pheromone preparation was determined in the same manner as in Example 1. The results are shown in FIG. 5. As shown in FIG. 5, the short tubular sustained release pheromone preparation was found to be capable of releasing Z8-dodecenyl acetate over 100 days.

### <Example 7>

A rope-like sustained release pheromone preparation was produced by extruding a 75:25 (w/w) polymer blend of polybutylene adipate succinate (Bionolle™ #3001, available from Showa Denko K.K.) having a compositional ratio of butylene adipate units to butylene succinate units of 0.20:0.80 and a condensation polymer (Aonilex™ X151X, available from Kaneka Corp.) of 3-hydroxybutyric acid and 3-hydroxyhexanoic acid at a compositional ratio of 0.85:0.15 into a tube having an inner diameter of 1.15 mm and a thickness of 0.40 mm, while simultaneously feeding into the tube E5-decenyl acetate, which is a sex pheromone substance of the peach twig borer. This rope-like sustained release pheromone preparation was melt-sealed at 200-mm intervals by ultrasonic welding, and then cut at the sealed parts to form a number of short tubular sustained release pheromone preparations.

The percentage of pheromone substance remaining in the short tubular sustained release pheromone preparation was determined in the same manner as in Example 1. The results are shown in FIG. 6. As shown in FIG. 6, the short tubular sustained release pheromone preparation was found to be capable of releasing E5-decenyl acetate over 80 days.

### <Example 8>

A rope-like sustained release pheromone preparation was produced by extruding a 95:5 (w/w) polymer blend of polybutylene adipate succinate (Bionolle™ #3001, available from Showa Denko K.K.) having a compositional ratio of butylene adipate units to butylene succinate units of 0.20:0.80 and a condensation polymer (Aonilex™ X131A, available from Kaneka Corp.) of 3-hydroxybutyric acid and 3-hydroxyhexanoic acid at a compositional ratio of 0.93:0.07 into a tube having an inner diameter of 1.20 mm and a thickness of 0.35 mm, while simultaneously feeding into the tube E4-tridecenyl acetate, which is a sex pheromone substance of the tomato pinworm. This rope-like sustained release pheromone preparation was melt-sealed at 200-mm intervals by ultrasonic welding, and then cut at the sealed parts to form a number of short tubular sustained release pheromone preparations.

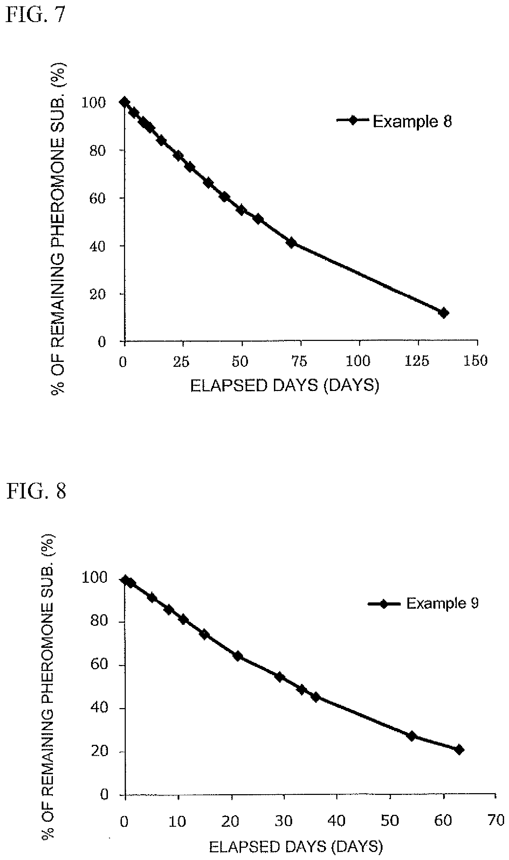

The percentage of pheromone substance remaining in the short tubular sustained release pheromone preparation was determined in the same manner as in Example 1. The results are shown in FIG. 7. As shown in FIG. 7, the short tubular sustained release pheromone preparation was found to be capable of releasing E4-tridecenyl acetate over 100 days.

### <Example 9>

A rope-like sustained release pheromone preparation was produced by extruding a 95:5 (w/w) polymer blend of polybutylene terephthalate succinate (Ecoflex™, available from BASF) having a compositional ratio of butylene terephthalate units to butylene succinate units of 0.05:0.95 and a condensation polymer (Aonilex™ X131A, available from Kaneka Corp.) of 3-hydroxybutyric acid and 3-hydroxyhexanoic acid at a compositional ratio of 0.93:0.07 into a tube having an inner diameter of 1.21 mm and a thickness of 0.55 mm, while simultaneously feeding into the tube dodecyl acetate, which is a sex pheromone substance of the sugarcane click beetle. This rope-like sustained release pheromone preparation was melt-sealed at 200-mm intervals by ultrasonic welding, and then cut at the sealed parts to form a number of short tubular sustained release pheromone preparations.

The percentage of pheromone substance remaining in the short tubular sustained release pheromone preparation was determined in the same manner as in Example 1. The results are shown in FIG. 8. As shown in FIG. 8, the short tubular sustained release pheromone preparation was found to be capable of releasing dodecyl acetate over 60 days.

### <Example 10>

A rope-like sustained release pheromone preparation was produced by extruding a 70:30 (w/w) polymer blend of polybutylene adipate succinate (Bionolle™ #3001, available from Showa Denko K.K.) having a compositional ratio of butylene adipate units to butylene succinate units of 0.20:0.80 and a condensation polymer (Aonilex™ X131A, available from Kaneka Corp.) of 3-hydroxybutyric acid and 3-hydroxyhexanoic acid at a compositional ratio of 0.93:0.07 into a tube having an inner diameter of 0.52 mm and a thickness of 0.40 mm, while simultaneously feeding into the tube a mixed solution of Z11-hexadecenal and Z-9-hexadecenal, which are sex pheromone substances of the American bollworm, and stearic acid, which is an oil gelling agent, at a weight ratio of 80:5:15. This rope-like sustained release pheromone preparation was melt-sealed at 200-mm intervals by ultrasonic welding, and then cut at the sealed parts to form a number of short tubular sustained release pheromone preparations.

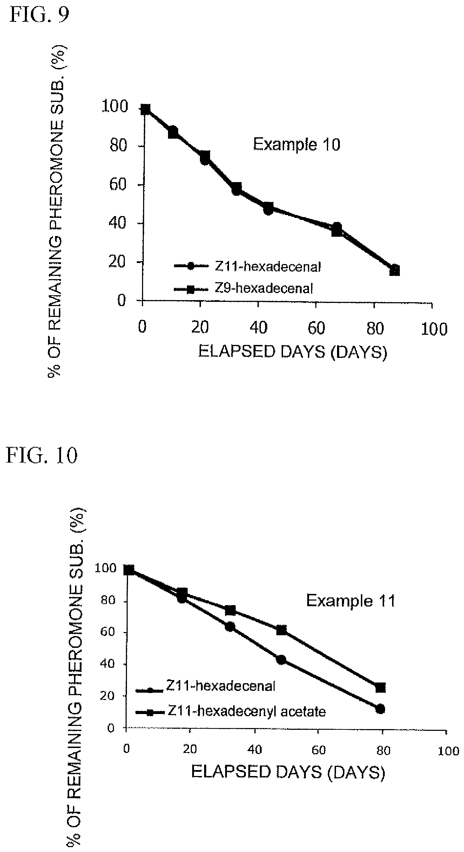

The short tubular sustained release pheromone preparation thus obtained was allowed to stand under the conditions of 30°C and a wind speed of 0.7 m/sec, and the percentage of remaining pheromone substance was determined in the same manner as in Example 2. The results are shown in FIG. 9. As shown in FIG. 9, the short tubular sustained release pheromone preparation was found to be capable of releasing Z11-hexadecenal and Z9-hexadecenal over 90 days.

### <Example 11>

A rope-like sustained release pheromone preparation was produced by extruding a 70:30 (w/w) polymer blend of polybutylene adipate succinate (Bionolle™ #3001, available from Showa Denko K.K.) having a compositional ratio of butylene adipate units to butylene succinate units of 0.20:0.80 and a condensation polymer (Aonilex™ X131A, available from Kaneka Corp.) of 3-hydroxybutyric acid and 3-hydroxyhexanoic acid at a compositional ratio of 0.93:0.07 into a tube having an inner diameter of 0.52 mm and a thickness of 0.40 mm, while simultaneously feeding into the tube a mixed solution of Z11-hexadecenal and Z11-hexadecenyl acetate, which are sex pheromone substances of the diamondback moth, and stearic acid, which is an oil gelling agent, at a weight ratio of 40:40:20. This rope-like sustained release pheromone preparation was melt-sealed at 200-mm intervals by ultrasonic welding, and then cut at the sealed parts to form a number of short tubular sustained release pheromone preparations.

The percentage of pheromone substance remaining in the short tubular sustained release pheromone preparation was determined in the same manner as in Example 10. The results are shown in FIG. 10. As shown in FIG. 10, the short tubular sustained release pheromone preparation was found to be capable of releasing Z11-hexadecenal and Z11-hexadecenyl acetate over 90 days.

### <Comparative Example 1>

A rope-like sustained release pheromone preparation was produced by extruding polybutylene adipate succinate (Bionolle™ #3001, available from Showa Denko K.K.) having a compositional ratio of butylene adipate units to butylene succinate units of 0.20:0.80 into a tube having an inner diameter of 1.40 mm and a thickness of 0.35 mm, while simultaneously feeding into the tube E7Z9-dodecadienyl acetate, which is a sex pheromone substance of the European grapevine moth. This rope-like sustained release pheromone preparation was melt-sealed at 200-mm intervals by ultrasonic welding, and then cut at the sealed parts to form a number of short tubular sustained release pheromone preparations.

The percentage of pheromone substance remaining in the short tubular sustained release pheromone preparation was determined in the same manner as in Example 1. The results are shown in FIG. 1. As shown in FIG. 1, the short tubular sustained release pheromone preparation had an excessive initial release rate of E7Z9-dodecadienyl acetate so that release duration was as short as 40 days.

### Comparative Example 2

A rope-like sustained release pheromone preparation was produced by extruding a copolymer (Novatec™ LV113, available from Japan Polyethylene Corp.) of ethylene and vinyl acetate at a compositional ratio of 0.96:0.04 into a tube having an inner diameter of 0.63 mm and a thickness of 0.40 mm, while simultaneously feeding into the tube a mixed solution of E8Z10-dodecadienol, which is a sex pheromone substance of the codling moth, and stearic acid, which is an oil gelling agent, at a weight ratio of 70:30. This rope-like sustained release pheromone preparation was melt-sealed at 200-mm intervals by ultrasonic welding, and then cut at the sealed parts to form a number of short tubular sustained release pheromone preparations.

The percentage of pheromone substance remaining in the short tubular sustained release pheromone preparation was determined in the same manner as in Example 1. The results are shown in FIG. 4. As shown in FIG. 4, the short tubular sustained release pheromone preparation had an excessive release rate so that all of the pheromone substance was released in about one month.

### Example 12

A rope-like sustained release pheromone preparation having an inner diameter of 0.62 mm and a thickness of 0.40 mm was prepared in the same manner as in Example 3 and was wound around a paper reel to prepare 5 rolls in total, each roll having a total length of 600 meters. This rope-like sustained release pheromone preparation was installed in a 5-ha vineyard of Tuscany, Italy, in December 2016, by unrolling it from the reel to stretch linearly from one end of the vineyard to the other end thereof along a ridge of trees, while hanging it on tree branches. It was cut when it reached at the other end of the field. Then, the rope-like sustained release pheromone preparation was similarly installed along another ridge of trees, separated away from the first ridge of trees by a distance of 20 meters, in parallel with the previous rope. Similar procedures were repeated so that the rope-like sustained release pheromone preparations were installed in the whole vineyard. The total length of the rope-like sustained release pheromone preparations installed in the 5-ha vineyard was 3,000 meters. Since the mixed solution of the pheromone substance and stearic acid had been fed into the rope-like sustained release pheromone preparation, the pheromone substance did not spill out even when the rope-like sustained release pheromone preparation was cut.

In addition, four sex pheromone traps were placed in the same vineyard where the rope-like sustained release pheromone preparations were installed, and the number of European grapevine moths caught in the traps was recorded on a weekly basis. To evaluate the emergence of the European grapevine moth, another set of four sex pheromone traps were placed in a vineyard 200 meters away from the vineyard where the rope-like sustained release pheromone preparations were installed, and the number of European grapevine moths caught in the traps was recorded on a weekly basis.

In the vineyard where no rope-like sustained release pheromone preparation was installed, 1,206 European grapevine moths were trapped in total during the months of from February to September. To contrast, in the vineyard where the rope-like sustained release pheromone preparations were installed, only 21 European grapevine moths were trapped in total during the months of from February to September. Thus, a highly efficient mating disruption was confirmed.

### Example 13

A rope-like sustained release pheromone preparation having an inner diameter of 0.63 mm and a thickness of 0.40 mm was prepared in the same manner as in Example 4 and was wound around a paper reel to prepare 15 rolls in total, each roll having a total length of 400 meters. In March, 2016, rope-like sustained release pheromone preparations were installed in a whole 5-ha apple orchard of Avignon, France, in the same manner as in Example 12, except that the sustained release pheromone preparations were placed at 10-meter intervals. The total length of the rope-like sustained release pheromone preparations installed in the 5-ha apple orchard was 6,000 meters. Since the mixed solution of the pheromone substance and stearic acid had been fed into the rope-like sustained release pheromone preparation, the pheromone substance did not spill out even when the rope-like sustained release pheromone preparation was cut.

In addition, four sex pheromone traps were placed in the same apple orchard where the rope-like sustained release pheromone preparations were installed, and the number of codling moths caught in the traps was recorded on a weekly basis. To evaluate the emergence of the codling moth, another set of four sex pheromone traps were placed in an apple orchard 200 meters away from the apple orchard where the rope-like sustained release pheromone preparations were installed, and the number of codling moths caught in the traps was recorded on a weekly basis.

In the apple orchard where no rope-like sustained release pheromone preparation was installed, 1,858 codling moths were trapped in total during the months of from March to September. To contrast, in the apple orchard where the rope-like sustained release pheromone preparations were installed, only 38 codling moths were trapped in total during the months of from March to September. Thus, a highly efficient mating disruption was confirmed.

### Example 14

A rope-like sustained release pheromone preparation having an inner diameter of 0.44 mm and a thickness of 0.40 mm was prepared in the same manner as in Example 5 and was wound around a paper reel to prepare 12 rolls in total, each roll having a total length of 400 meters. In February 2016, rope-like sustained release pheromone preparations were installed in a whole 4-ha peach orchard of California, U.S.A., in the same manner as in Example 12, except that the sustained release pheromone preparations were placed at 10-meter intervals. The total length of the rope-like sustained release pheromone preparations installed in the 4-ha peach orchard was 4,800 meters. Since the mixed solution of the pheromone substance and stearic acid had been fed to the rope-like sustained release pheromone preparation, the pheromone substance did not spill out even when the rope-like sustained release pheromone preparation was cut.

In addition, four sex pheromone traps were placed in the same peach orchard where the rope-like sustained release pheromone preparations were installed, and the number of oriental fruit moths caught in the traps was recorded on a weekly basis. To evaluate the emergence of the oriental fruit moth, another set of four sex pheromone traps was placed in an peach orchard 200 meters away from the peach orchard where the rope-like sustained release pheromone preparations were installed, and the number of oriental fruit moths caught in the traps was recorded on a weekly basis.

In the peach orchard where no rope-like sustained release pheromone preparation was installed, 1,794 oriental fruit moths were trapped in total during the months of from February to September. To contrast, in the peach orchard where the rope-like sustained release pheromone preparations were installed, only one oriental fruit moth was trapped in total during the months of from February to September. Thus, a highly efficient mating disruption was confirmed.

### Example 15

A rope-like sustained release pheromone preparation having an inner diameter of 0.63 mm and a thickness of 0.45 mm was prepared in the same manner as in Example 6 and was wound around a paper reel to prepare 8 rolls in total, each roll having a total length of 300 meters. In February 2016, this rope-like sustained release pheromone preparation was installed in a whole 4-ha peach orchard of California, U.S.A., in the same manner as in Example 12. The total length of the rope-like sustained release pheromone preparations installed in the 4-ha peach orchard was 2,400 meters. Since the mixed solution of the pheromone substance and stearic acid was fed into the rope-like sustained release pheromone preparation, the pheromone substance did not spill out even when the rope-like sustained release pheromone preparation was cut.

In addition, four sex pheromone traps were placed in the same peach orchard where the rope-like sustained release pheromone preparations were installed, and the number of oriental fruit moths caught in the traps was recorded on a weekly basis. To evaluate the emergence of the oriental fruit moth, another set of four sex pheromone traps was placed in an peach orchard 200 meters away from the peach orchard where the rope-like sustained release pheromone preparations were installed, and the number of oriental fruit moths caught in the traps was recorded on a weekly basis.

In the peach orchard where no rope-like sustained release pheromone preparation was installed, 1,794 oriental fruit moths were trapped in total during the months of from February to September. To contrast, in the peach orchard where the rope-like sustained release pheromone preparations were installed, only 39 oriental fruit moths were trapped in total during the months of from February to September. Thus, a highly efficient mating disruption was confirmed.

## Claims

1. A sustained release pheromone preparation comprising:
at least one pheromone substance, and
a container for enclosing the pheromone substance therein, the container comprising a polymer membrane which comprises a polymer blend of:
an aliphatic polyester having following structural units: 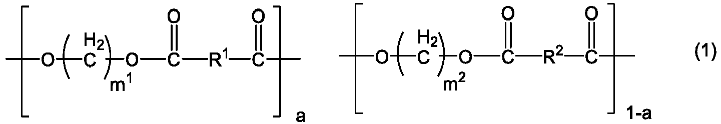 wherein "a" and "1-a" mean compositional ratios of the structural units and "a" is the number which satisfies the equation: 0<a≤1, R¹ is one selected from divalent hydrocarbon groups having 1 to 8 carbon atoms, R² is one selected from divalent hydrocarbon groups having 1 to 7 carbon atoms, with the proviso that R¹ has more carbon atoms than R² does when "a" is not 1, m¹ and m² may be the same as or different from each other and each stands for a positive integer of from 2 to 10, and
a poly(hydroxyalkanoate) having the following structural units: 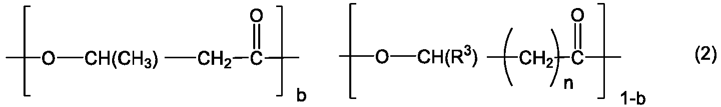
wherein "b" and "1-b" mean compositional ratios of the structural units and "b" is the number which satisfies the equation: 0<b<1, R³ is one selected from a hydrogen atom and monovalent hydrocarbon groups having 1 to 4 carbon atoms, "n" stands for an integer of from 0 to 4, with the proviso that "n" is not 1 when R³ is a methyl group,
wherein the pheromone substance is selected from the group consisting of aliphatic alcohols having 10 to 18 carbon atoms, acetate esters of aliphatic alcohols having 10 to 18 carbon atoms, and aliphatic aldehydes having 10 to 18 carbon atoms.

2. The sustained release pheromone preparation according to claim 1, wherein a weight ratio of the aliphatic polyester to the poly(hydroxyalkanoate) ranges from 50:50 to 98:2.

3. The sustained release pheromone preparation according to claim 1 or 2, wherein the aliphatic polyester is selected from the group consisting of polybutylcnc succinate, polybutylene adipate, polybutylene phthalate, polybutylene adipate succinate, and polybutylene terephthalate succinate.

4. The sustained release pheromone preparation according to any one of claims 1 to 3, wherein the poly(hydroxyalkanoate) is selected from the group consisting of a condensation polymer of 3-hydroxybutyric acid and 4-hydroxybutyric acid, a condensation polymer of 3-hydroxybutyric acid and 3-hydroxypentanoic acid, and a condensation polymer of 3-hydroxybutyric acid and 3-hydroxyhexanoic acid.

5. The sustained release pheromone preparation according to any one of claims 1 to 4, wherein the container is in the form of a tube or an ampoule.

6. The sustained release pheromone preparation according to claim 5, wherein the tube has an inner diameter of from 0.10 to 2.00 mm, a thickness of from 0.20 to 0.80 mm, and a length of from 1 to 2,000 meters.

7. The sustained release pheromone preparation according to any one of claims 1 to 6, further comprising, together with the pheromone substance, an oil gelling agent.

8. A method for controlling an insect pest, comprising a step of installing the sustained release pheromone preparation according to any one of claims 1 to 7 in a field to allow the pheromone substance to permeate through the polymer membrane and to be released into the field.

## Patentansprüche

1. Ein Pheromonpräparat mit verzögerter Freisetzung, umfassend:
mindestens eine Pheromonsubstanz und
einen Behälter, um die Pheromonsubstanz darin einzuschließen, wobei der Behälter eine Polymermembran umfasst, die eine Polymermischung umfasst aus:
einem aliphatischen Polyester mit den nachstehenden Struktureinheiten: 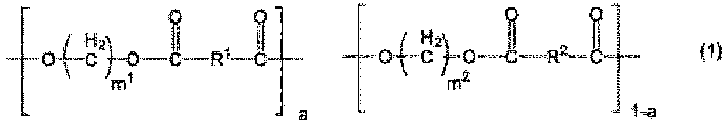
wobei "a" und "1-a" Zusammensetzungsverhältnisse der Struktureinheiten bedeuten und "a" die Zahl ist, die die Gleichung: 0<a≤1 erfüllt, R¹ eines ist, das ausgewählt ist aus zweiwertigen Kohlenwasserstoffgruppen mit 1 bis 8 Kohlenstoffatomen, R² eines ist, das ausgewählt ist aus zweiwertigen Kohlenwasserstoffgruppen mit 1 bis 7 Kohlenstoffatomen, mit der Maßgabe, dass R¹ mehr Kohlenstoffatome als R² aufweist, wenn "a" nicht 1 ist, m¹ und m² gleich oder verschieden voneinander sein können und
jedes für eine positive ganze Zahl von 2 bis 10 steht, und einem Poly(hydroxyalkanoat) mit den nachstehenden Struktureinheiten: 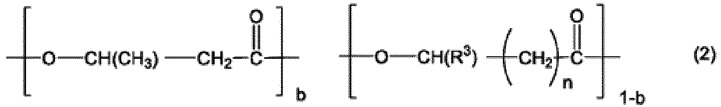
wobei "b" und "1-b" Zusammensetzungsverhältnisse der Struktureinheiten bedeuten und "b" die Zahl ist, die die Gleichung: 0<b<1 erfüllt, R³ eines ist, das ausgewählt ist aus einem Wasserstoffatom und einwertigen Kohlenwasserstoffgruppen mit 1 bis 4 Kohlenstoffatomen, "n" für eine ganze Zahl von 0 bis 4 steht, mit der Maßgabe, dass "n" nicht 1 ist, wenn R³ eine Methylgruppe ist,
wobei die Pheromonsubstanz ausgewählt ist aus der Gruppe bestehend aus aliphatischen Alkoholen mit 10 bis 18 Kohlenstoffatomen, Acetatestern von aliphatischen Alkoholen mit 10 bis 18 Kohlenstoffatomen und aliphatischen Aldehyden mit 10 bis 18 Kohlenstoffatomen.

2. Das Pheromonpräparat mit verzögerter Freisetzung nach Anspruch 1, wobei ein Gewichtsverhältnis des aliphatischen Polyesters zu dem Poly(hydroxyalkanoat) im Bereich von 50:50 bis 98:2 liegt.

3. Das Pheromonpräparat mit verzögerter Freisetzung nach Anspruch 1 oder 2, wobei der aliphatische Polyester ausgewählt ist aus der Gruppe bestehend aus Polybutylensuccinat, Polybutylenadipat, Polybutylenphthalat, Polybutylenadipatsuccinat und Polybutylenterephthalatsuccinat.

4. Das Pheromonpräparat mit verzögerter Freisetzung nach einem der Ansprüche 1 bis 3, wobei das Poly(hydroxyalkanoat) ausgewählt ist aus der Gruppe bestehend aus einem Kondensationspolymer aus 3-Hydroxybuttersäure und 4-Hydroxybuttersäure, einem Kondensationspolymer aus 3-Hydroxybuttersäure und 3-Hydroxypentansäure und einem Kondensationspolymer aus 3-Hydroxybuttersäure und 3-Hydroxyhexansäure.

5. Das Pheromonpräparat mit verzögerter Freisetzung nach einem der Ansprüche 1 bis 4, wobei der Behälter in der Form einer Röhre oder einer Ampulle vorliegt.

6. Das Pheromonpräparat mit verzögerter Freisetzung nach Anspruch 5, wobei die Röhre einen inneren Durchmesser von 0,10 bis 2,00 mm, eine Dicke von 0,20 bis 0,80 mm und eine Länge von 1 bis 2.000 Metern aufweist.

7. Das Pheromonpräparat mit verzögerter Freisetzung nach einem der Ansprüche 1 bis 6, ferner umfassend, zusammen mit der Pheromonsubstanz, ein Ölgeliermittel.

8. Ein Verfahren zur Bekämpfung eines Schädlingsbefalls, umfassend einen Schritt des Installierens des Pheromonpräparats mit verzögerter Freisetzung nach einem der Ansprüche 1 bis 7 in einem Feld, um der Pheromonsubstanz zu ermöglichen, durch die Polymermembran zu dringen und in das Feld freigesetzt zu werden.

## Revendications

1. Préparation de phéromone à libération prolongée comprenant :
- au moins une substance de type phéromone, et
- un récipient destiné à contenir la substance de type phéromone dans celui-ci, le récipient comprenant une membrane polymère qui comprend un mélange polymère de :
• un polyester aliphatique ayant les motifs structurels suivants : 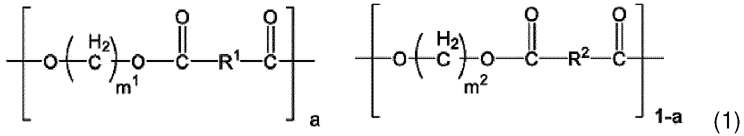 dans lesquels "a" et "1-a" désignent les rapports de composition des motifs structurels, et "a" est un nombre satisfaisant à l'inégalité 0 < a ≤ 1, R¹ est l'un choisi parmi les groupes hydrocarbonés divalents ayant 1 à 8 atomes de carbone, R² est l'un choisi parmi les groupes hydrocarbonés divalents ayant 1 à 7 atomes de carbone, sous réserve que R¹ ait davantage d'atomes de carbone que R² quand "a" ne vaut pas 1, chacun de m¹ et m², qui peuvent être identiques ou différents, est un entier positif de 2 à 10, et
• un polyhydroxyalcanoate ayant les motifs structurels suivants : 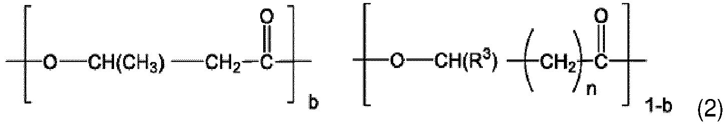 dans lesquels "b" et "1-b" désignent les rapports de composition des motifs structurels, et "b" est un nombre satisfaisant à l'inégalité 0 < b < 1, R³ est l'un choisi parmi un atome d'hydrogène et les groupes hydrocarbonés monovalents ayant 1 à 4 atomes de carbone, "n" est un entier de 0 à 4, sous réserve que "n" ne vaille pas 1 quand R³ est un groupe méthyle,
dans laquelle la substance de type phéromone est choisie dans l'ensemble constitué par les alcools aliphatiques ayant 10 à 18 atomes de carbone, les esters acétates d'alcools aliphatiques ayant 10 à 18 atomes de carbone, et les aldéhydes aliphatiques ayant 10 à 18 atomes de carbone.

2. Préparation de phéromone à libération prolongée selon la revendication 1, dans laquelle le rapport en poids du polyester aliphatique sur le polyhydroxyalcanoate est situé dans la plage allant de 50/50 à 98/2.

3. Préparation de phéromone à libération prolongée selon la revendication 1 ou 2, dans laquelle le polyester aliphatique est choisi dans l'ensemble constitué par le poly(succinate de butylène), le poly(adipate de butylène), le poly(phtalate de butylène), le poly(adipate-succinate de butylène), et le poly(téréphtalate-succinate de butylène).

4. Préparation de phéromone à libération prolongée selon l'une quelconque des revendications 1 à 3, dans laquelle le polyhydroxyalcanoate est choisi dans l'ensemble constitué par un polymère de condensation d'acide 3-hydroxybutyrique et d'acide 4-hydroxybutyrique, un polymère de condensation d'acide 3-hydroxybutyrique et d'acide 3-hydroxypentanoïque, et un polymère de condensation d'acide 3-hydroxybutyrique et d'acide 3-hydroxyhexanoïque.

5. Préparation de phéromone à libération prolongée selon l'une quelconque des revendications 1 à 4, dans laquelle le récipient est sous la forme d'un tube ou d'une ampoule.

6. Préparation de phéromone à libération prolongée selon la revendication 5, dans laquelle le tube a un diamètre intérieur de 0,10 à 2,00 mm, une épaisseur de 0,20 à 0,80 mm, et une longueur de 1 à 2000 mètres.

7. Préparation de phéromone à libération prolongée selon l'une quelconque des revendications 1 à 6, comprenant en outre, conjointement avec la substance de type phéromone, un agent gélifiant pour huile.

8. Procédé de lutte contre un insecte nuisible, comprenant une étape d'installation de la préparation de phéromone à libération prolongée de l'une quelconque des revendications 1 à 7 dans un champ pour permettre à la substance de type phéromone de traverser la membrane polymère par perméation et d'être libérée dans le champ.
